Europäisches Patentamt

**European Patent Office**

**Office européen des brevets**

(19)

(11) Numéro de publication : **0 103 513**

**B1**

(12) # FASCICULE DE BREVET EUROPÉEN

(45) Date de publication du fascicule du brevet :
03.12.86

(51) Int. Cl.⁴ : **B 23 K   9/02**

(21) Numéro de dépôt : **83401737.8**

(22) Date de dépôt : **01.09.83**

(54) Dispositif de positionnement d'un organe par rapport à deux surfaces conductrices planes et procédé de mise en œuvre d'un tel dispositif.

(30) Priorité : **10.09.82 FR 8215349**

(43) Date de publication de la demande :
**21.03.84 Bulletin 84/12**

(45) Mention de la délivrance du brevet :
**03.12.86 Bulletin 86/49**

(84) Etats contractants désignés :
**DE GB IT SE**

(56) Documents cités :
FR-A- 2 373 820
FR-A- 2 507 310
GB-A- 2 067 765
US-A- 3 484 667
US-A- 4 205 217

(73) Titulaire : **COMMISSARIAT A L'ENERGIE ATOMIQUE
Etablissement de Caractère Scientifique Technique
et Industriel
31/33, rue de la Fédération
F-75015 Paris (FR)**

(72) Inventeur : **Detriche, Jean Marie
38, rue de Tourville
F-78100 Saint Germain en Laye (FR)**

(74) Mandataire : **Mongrédien, André et al
c/o BREVATOME 25, rue de Ponthieu
F-75008 Paris (FR)**

EP 0 103 513 B1

Jouve, 18, rue St-Denis, 75001 Paris, France

## Description

La présente invention se rapporte à un dispositif de positionnement d'un organe par rapport à deux surfaces conductrices planes définissant une ligne de joint et formant entre elles un angle déterminé, ainsi qu'à un procédé pour la mise en œuvre d'un tel dispositif.

Le problème du positionnement, et notamment de l'orientation, automatiques d'un organe par rapport à deux surfaces conductrices localement planes se pose notamment dans le cas du soudage mécanisé ou robotisé de joints d'angle. En effet, le soudage de deux pièces formant entre elles un angle déterminé, au moyen d'un robot ou d'une machine automatique, suppose que des moyens soient prévus pour orienter et pour positionner automatiquement la torche de soudage par rapport à ces pièces. Toutefois, l'invention n'est pas limitée à cette application et pourra être utilisée dans tous les cas où un organe doit être positionné et orienté par rapport à deux surfaces conductrices localement planes formant entre elles un angle connu.

De façon plus précise, l'invention s'applique au cas où l'on détermine la position de l'organe à orienter au moyen de capteurs proximétriques à courants de Foucault ne nécessitant aucun contact avec les pièces à souder.

Dans l'état actuel de la technique, il existe un robot japonais commercialisé par la firme HITACHI, dans lequel la tête de soudage est munie de deux capteurs proximétriques à courants de Foucault orientés à 90° l'un par rapport à l'autre et à 45° par rapport à l'axe de la torche (voir le document US-A-4 205 217). Il existe aussi un dispositif suédois commercialisé par la firme MATERIAL DATA AB dans lequel deux bobines à courants de Foucault, disposées de la même manière que sur le matériel de la firme HITACHI, sont intégrées à une bague disposée autour d'une torche de soudage MIG refroidie.

Ces deux dispositifs connus présentent un certain nombre d'inconvénients qui rendent leur domaine d'utilisation très limité. Ainsi, ces deux dispositifs ne fonctionnent correctement que si l'orientation du support des capteurs, par rapport aux pièces à souder, est satisfaisante. Sinon, les mesures effectuées sont entachées d'erreurs. Lorsque les pièces à souder sont de faibles dimensions, leur bridage peut être réalisé avec soin, de telle sorte que les erreurs d'orientation sont limitées et qu'on peut s'accommoder de cet inconvénient. En revanche, le bridage des pièces de grande dimension ne peut pas être réalisé parfaitement et les déformations qui résultent de ce bridage imparfait produisent des déplacements et des changements d'orientation des pièces à souder. Les erreurs sur les mesures effectuées à l'aide des dispositifs connus sont alors importantes. L'utilisation de ces dispositifs de positionnement connus doit donc être limitée au soudage de pièces de faible dimension.

De plus, le dispositif commercialisé par la firme HITACHI est encombrant, de sorte qu'il est mal adapté au soudage automatique.

Par ailleurs, le brevet GB-A-2 067 765 décrit un robot de soudage automatique permettant d'asservir une torche de soudage à suivre un joint entre deux tôles à souder, à une hauteur donnée. Lorsque les tôles ne sont ni parallèles, ni coplanaires, on utilise seulement deux capteurs proximétriques à induction électromagnétique.

La présente invention a précisément pour objet un dispositif de positionnement d'un organe par rapport à deux surfaces conductrices localement planes ne présentant pas les inconvénients des dispositifs de la technique antérieure et pouvant notamment être utilisé quelle que soit la qualité du bridage des pièces à souder et donc quelles que soient leurs dimensions, tout en étant bien adapté au soudage automatique.

A cet effet et conformément à l'invention, il est proposé un dispositif de positionnement d'un organe par rapport à deux surfaces conductrices planes définissant une ligne de joint et formant entre elles un angle déterminé, comprenant un capteur à courants de Foucault assujetti audit organe, des moyens de commande d'asservissement sensibles aux signaux délivrés par le capteur pour élaborer des signaux de commande de position, et notamment d'orientation, dudit organe et des moyens moteurs sensibles aux signaux de commande pour positionner le capteur et ledit organe, caractérisé en ce que le capteur comprend une première paire de bobines, parallèles entre elles, et disposées dans un même plan dit « transversal », une deuxième paire de bobines disposée, dans le même plan transversal que la première paire de bobines et formant avec celles-ci un angle complémentaire de l'angle formé entre les surfaces, une cinquième bobine parallèle à l'une des bobines de la première paire et disposée avec celle-ci dans un plan perpendiculaire au plan transversal et une sixième bobine parallèle à l'une des bobines de la deuxième paire et disposée avec celle-ci dans un deuxième plan perpendiculaire au plan transversal, les moyens de commande d'asservissement comprenant des moyens de traitement des signaux émis par les bobines délivrant, pour chacune d'entre elles, un signal de proximité représentatif de la distance qui la sépare de la surface en vis-à-vis, des moyens de calcul élaborant les signaux de commande à partir de certains des signaux de proximité pris deux à deux, et des moyens pour subordonner la transmission d'un signal de commande aux moyens moteurs qui lui correspondent à la mise en œuvre de moyens moteurs précédents, selon un ordre déterminé, un décalage éventuel entre l'une au moins desdites bobines et les orientations relatives de celles-ci définies précédemment étant pris en compte par lesdits moyens de traitement, de telle sorte que les signaux de proximité délivrés par ces derniers soient identiques à ceux obtenus avec des bobines présentant lesdites orientations relatives.

Grâce à ces caractéristiques, le détecteur selon l'invention permet de prendre en compte les erreurs angulaires et donc d'orienter correctement la torche de soudage. En conséquence, on peut mesurer la position de la torche sans erreur. En outre, il faut noter que la subordination de la mise en œuvre d'un ensemble de moyens moteurs permettant d'orienter le capteur à la mise en œuvre de l'ensemble de moyens moteurs précédent permet, en choisissant astucieusement l'ordre de mise en œuvre successive des moyens moteurs, d'orienter et de positionner le capteur de façon à rendre valides les mesures suivantes, c'est-à-dire à supprimer les erreurs sur ces mesures qui pourraient résulter d'une mauvaise orientation ou d'un mauvais positionnement.

A cet effet et conformément à une autre caractéristique de l'invention, les moyens moteurs comprennent de préférence, selon ledit ordre déterminé par les moyens de subordination, un premier ensemble de moyens d'orientation angulaire autour d'un axe perpendiculaire au plan transversal, un ensemble de moyens de positionnement latéral selon une direction perpendiculaire à la bissectrice de l'angle formé entre les bobines correspondantes des première et deuxième paires de bobines dans ledit plan transversal, un ensemble de moyens de positionnement en hauteur selon une direction parallèle à ladite bissectrice, dans le plan transversal, un deuxième ensemble de moyens d'orientation angulaire autour d'un axe parallèle à ladite bissectrice, et un troisième ensemble de moyens d'orientation angulaire autour d'un axe parallèle au plan transversal et perpendiculaire à ladite bissectrice, et les axes de pivotement définis par lesdits ensembles de moyens d'orientation angulaire passent par l'extrémité dudit organe.

De façon comparable, les moyens de calcul comprennent de préférence, selon ledit ordre déterminé par les moyens de subordination, un moyen pour calculer la différence entre les signaux de proximité de bobines, un moyen pour calculer la différence entre les signaux de proximité correspondant à une bobine de la première paire et à une bobine de la deuxième paire, un moyen pour calculer la somme de ces derniers signaux de proximité, un moyen pour calculer la différence entre les signaux de proximité correspondant à la sixième bobine et à la bobine de la deuxième paire qui lui est parallèle, et un moyen pour calculer la différence entre les signaux de proximité correspondant à la cinquième bobine et à la bobine de la première paire qui lui est parallèle, et les moyens de calcul comprennent de plus, pour chacun de ces derniers moyens, un moyen pour comparer la différence ou la somme calculée à une valeur de consigne, afin d'élaborer lesdits signaux de commande.

Pour que le positionnement et l'orientation obtenus à l'aide du dispositif selon l'invention restent valables, il faut que l'angle formé entre les tôles reste proche de l'angle initial mesuré avant le soudage. Cela n'est pas forcément le cas lorsque la déformation des pièces résultant du soudage devient trop importante. Afin d'informer l'opérateur qu'on se trouve dans une telle situation et, éventuellement, de commander automatiquement l'arrêt du robot, les moyens de calcul peuvent comprendre de plus, après ledit moyen pour calculer la différence entre les signaux de proximité correspondant aux bobines de la première paire selon ledit ordre déterminé par les moyens de subordination, un moyen pour calculer la différence entre les signaux de proximité correspondant aux bobines de la deuxième paire, et un moyen pour comparer la différence ainsi calculée à une valeur d'erreur, et le dispositif comprend de plus un système d'alarme dont la mise en œuvre est commandée par ce dernier moyen lorsque la différence calculée est supérieure au signal d'erreur.

Bien que la torche de soudage soit de préférence refroidie, on peut adjoindre au capteur une bobine de compensation en température. Cela est notamment le cas lorsque le capteur comprend une bague en matériau céramique fixée sur la torche, la bague portant lesdites bobines de telle sorte que la bobine de compensation en température soit à proximité de la surface de la torche, avec un couplage thermique identique à celui des autres bobines.

L'invention a également pour objet un procédé de mise en œuvre d'un tel dispositif d'orientation, ce procédé étant caractérisé en ce qu'il consiste à :

— élaborer, pour chaque bobine du capteur, un signal de proximité représentatif de la distance séparant cette bobine de la surface en vis-à-vis,

— élaborer les signaux de commande d'orientation dudit organe à partir de certains des signaux de proximité pris deux à deux, et

— subordonner la transmission d'un signal de commande aux moyens moteurs qui lui correspondent à la mise en œuvre des moyens moteurs précédents, selon un ordre déterminé.

Afin que l'ordre des actions effectuées sur le détecteur et sur la torche permette, comme on l'a indiqué précédemment, de valider les mesures suivantes, on effectue successivement :

— l'orientation angulaire autour d'un axe perpendiculaire au plan transversal et passant par l'extrémité de la torche,

— le positionnement latéral selon une direction perpendiculaire à la bissectrice de l'angle formé entre les bobines correspondantes des première et deuxième paires de bobines dans ledit plan transversal,

— le positionnement en hauteur selon une direction parallèle à ladite bissectrice, dans le plan transversal,

— l'orientation angulaire autour d'un axe parallèle à ladite bissectrice, et passant par l'extrémité de la torche, et

— l'orientation angulaire autour d'un axe parallèle au plan transversal, perpendiculaire à ladite bissectrice et passant par l'extrémité de la torche.

De préférence, après avoir effectué l'orientation angulaire autour de l'axe perpendiculaire au plan transversal, on contrôle l'angle formé entre les surfaces et on déclenche une alarme lorsque l'écart entre l'angle réel et l'angle initial dépasse une valeur déterminée.

On décrira maintenant, à titre d'exemple non limitatif, un mode de réalisation préféré de l'invention en se référant aux dessins annexés dans lesquels :

la figure 1 est une vue en perspective qui représente de façon schématique l'orientation des bobines du capteur du dispositif selon l'invention par rapport à deux surfaces conductrices planes à souder formant entre elles un angle déterminé,

la figure 2 est une vue prise dans un plan transversal par rapport aux surfaces à souder, ce plan contenant quatre des bobines du détecteur représenté sur la figure 1,

la figure 3 est une vue comparable à la figure 2 et prise dans le même plan mais représentant seulement deux des quatre bobines de la figure 2,

la figure 4 est une vue prise dans un plan perpendiculaire au plan transversal des figures 2 et 3 et contenant deux des bobines du capteur représenté sur la figure 1 en vis-à-vis de la surface plane de l'une des pièces à souder,

la figure 5 est une vue comparable à la figure 4 prise dans un autre plan perpendiculaire au plan transversal des figures 2 et 3 et contenant deux autres bobines du capteur de la figure 1 placées en vis-à-vis de la surface plane de l'autre pièce à souder,

la figure 6a est une vue de côté et la figure 6b est une vue selon la flèche F de la figure 6a d'une torche de soudage sur laquelle est implanté le capteur du dispositif selon l'invention,

la figure 7 est une vue de côté comparable à la figure 6a illustrant le montage des bobines du capteur sur la torche de soudage au moyen d'une bague en matériau céramique,

la figure 8 représente l'organigramme de commande du dispositif de positionnement selon l'invention, et

la figure 9 illustre de façon schématique l'ensemble du dispositif de positionnement permettant de commander les différents mouvements d'orientation et de positionnement de la torche et du capteur à l'aide du capteur représenté sur les figures 2, 6a et 6b, selon l'organigramme de la figure 8.

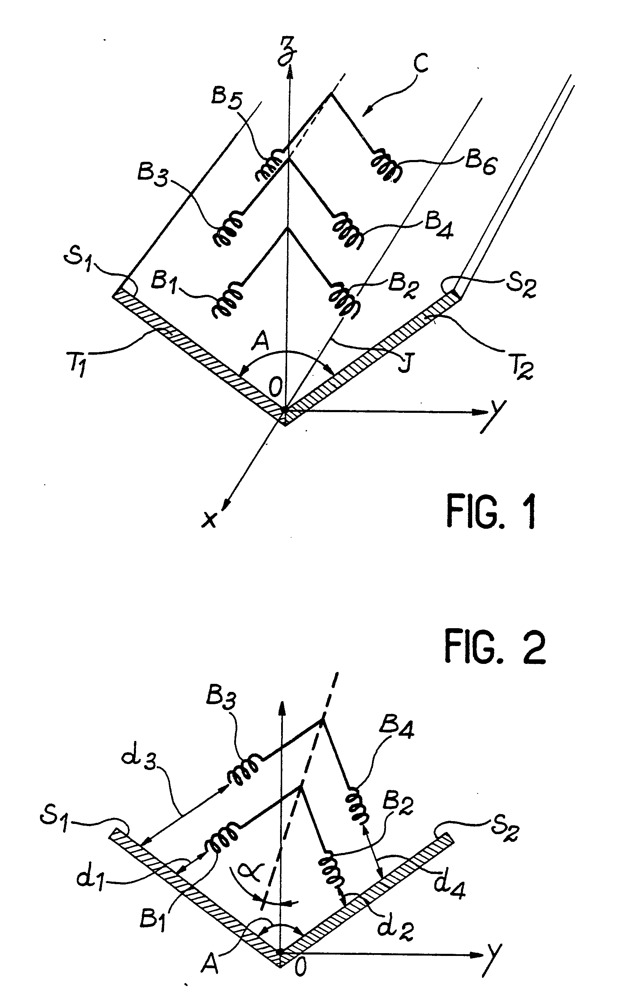

On a représenté de façon schématique sur la figure 1 les deux pièces à souder qui peuvent être constituées par des tôles $T_1$ et $T_2$ définissant au moins dans la zone la plus proche du joint J à souder des surfaces sensiblement planes $S_1$ et $S_2$.

On a aussi représenté sur la figure 1 un repère local orthonormé Oxyz qui est défini de telle sorte que l'axe Ox est confondu avec l'axe du joint J à souder, l'axe Oz étant perpendiculaire à l'axe Ox et définissant avec celui-ci le plan bissecteur Oxz de l'angle A formé entre les surfaces $S_1$ et $S_2$, et l'axe Oy étant perpendiculaire à ce plan bissecteur. Dans la suite de la description, on appellera le plan yOz plan transversal, le plan xOz plan longitudinal ou bissecteur, et le plan xOy plan tangent.

Comme on le verra dans la suite de la description, l'invention s'applique au cas où les surfaces $S_1$ et $S_2$ restent planes ou sensiblement planes au moins dans la zone proche du joint J, où sont disposées les bobines de mesure, et où l'angle A formé entre ces surface reste de ce fait sensiblement constant.

Les tôles $T_1$ et $T_2$ à souder étant en un matériau conducteur de l'électricité, le dispositif de positionnement selon l'invention comporte un capteur à courants de Foucault C prévu comme on le verra ultérieurement pour être assujetti à l'organe à orienter, c'est-à-dire à la torche de soudage dans l'exemple considéré. Par « assujetti », on entend soit que le capteur C est directement fixé sur la torche de soudage, soit que le capteur et la torche sont fixés sur un support commun.

Sur la figure 1, on a représenté le capteur C dans la position qu'il occupe normalement par rapport aux surfaces $S_1$ et $S_2$ lorsque la torche de soudage est orientée correctement selon le plan bissecteur xOz de ces surfaces. On comprendra qu'en pratique, cette position idéale du capteur est constamment remise en cause lors de l'avance de la torche le long du joint, en raison des déformations pouvant résulter d'un bridage imparfait des tôles ou simplement de l'échauffement des pièces, lors de l'avance de la soudure. Comme on le verra ultérieurement, le dispositif de positionnement selon l'invention permet justement de compenser automatiquement ces défauts d'orientation pour ramener le capteur dans la position représentée sur la figure 1.

Comme on le voit sur la figure 1, le capteur à courants de Foucault C selon l'invention comprend six bobines $B_1$ à $B_6$ disposées de la façon suivante :

— une première paire de bobines $B_1$ et $B_3$ parallèles entre elles et disposées dans un même plan coupant la ligne de joint Ox, ce plan étant le plan transversal yOz lorsque le capteur C est orienté comme on l'a représenté sur la figure 1,

— une deuxième paire de bobines $B_2$ et $B_4$ disposées dans le même plan que les bobines $B_1$ et $B_3$, les bobines $B_1$ et $B_2$ d'une part et les bobines $B_3$ et $B_4$ d'autre part formant entre elles un angle complémentaire de l'angle A formé entre les surfaces $S_1$ et $S_2$ ;

— une cinquième bobine $B_5$ parallèle à la bobine $B_3$ et disposée avec celle-ci dans un plan perpendiculaire au plan contenant les bobines $B_1$ à $B_4$, c'est-à-dire dans un plan perpendiculaire à la surface $S_1$ lorsque le capteur C est orienté comme on l'a représenté sur la figure 1, et

— une sixième bobine $B_6$ parallèle à la bobine $B_4$ et disposée avec celle-ci dans un autre plan perpendiculaire au plan contenant les bobines $B_1$ à $B_4$, cet autre plan étant perpendiculaire à la surface $S_2$ lorsque le capteur C est orienté comme on l'a représenté sur la figure 1.

Le principe de la détermination de l'orientation et du positionnement du capteur C par rapport aux surfaces $S_1$ et $S_2$ sera maintenant exposé en se référant aux figures 2 à 5, en respectant l'ordre dans lequel ces différentes opérations sont effectuées de préférence conformément à l'invention, pour que chaque opération valide la suivante.

Ainsi, on voit tout d'abord sur la figure 2 comment la première paire de bobines $B_1$ et $B_3$ peut être utilisée pour déterminer l'orientation $\alpha$ de la torche et du capteur autour d'un axe perpendiculaire au plan contenant ces bobines, c'est-à-dire autour d'un axe parallèle à l'axe Ox dans la configuration représentée sur la figure 1. On a aussi représenté sur la figure 2 la deuxième paire de bobines $B_2$ et $B_4$ qui peut servir le cas échéant à contrôler que l'angle formé entre les surfaces $S_1$ et $S_2$ reste suffisamment proche de l'angle A initial pour ne pas fausser la suite des mesures.

On voit ainsi sur la figure 2 que la mesure des distances $d_1$ et $d_3$ séparant l'extrémité de chacune des bobines $B_1$ et $B_3$ de la surface $S_1$ en vis-à-vis permet, en calculant la différence $d_1 - d_3$ et en comparant ensuite cette différence à l'orientation angulaire $\alpha$ que l'on désire obtenir, de connaître le décalage angulaire de la torche par rapport à cette orientation $\alpha$. L'amplitude et le signe du signal d'erreur $d_1 - d_3 - \alpha$ ainsi calculé déterminent l'amplitude et le sens du mouvement d'orientation angulaire à effectuer à l'aide de l'ensemble moteur correspondant $M_\alpha$.

Par ensemble moteur $M_\alpha$ on désignera tous les moyens moteurs permettant par leurs mouvements combinés et/ou simultanés d'appliquer au support le mouvement d'orientation angulaire $\alpha$.

Bien entendu, le même type de mesure pourrait être obtenu à l'aide des bobines $B_2$ et $B_4$ en mesurant avec celles-ci les distances $d_2$ et $d_4$ les séparant de la surface $S_2$ et en calculant la différence $d_2 - d_4$. Toutefois, cette redondance n'est pas inutile, car elle permet notamment de vérifier que l'angle A formé entre les tôles a une valeur correcte. Ainsi, lorsque les bobines $B_1$ et $B_3$ sont utilisées afin d'effectuer l'orientation $\alpha$, la mesure de $d_2 - d_4$ et la comparaison de cette différence à une valeur d'erreur $\varepsilon$ permet de vérifier que l'angle A formé entre les surfaces $S_1$ et $S_2$ n'est pas trop éloignée de sa valeur initiale. Dans le cas contraire, lorsque $d_2 - d_4$ est supérieur à $\varepsilon$, on peut activer une alarme signalant une déformation trop importante des pièces.

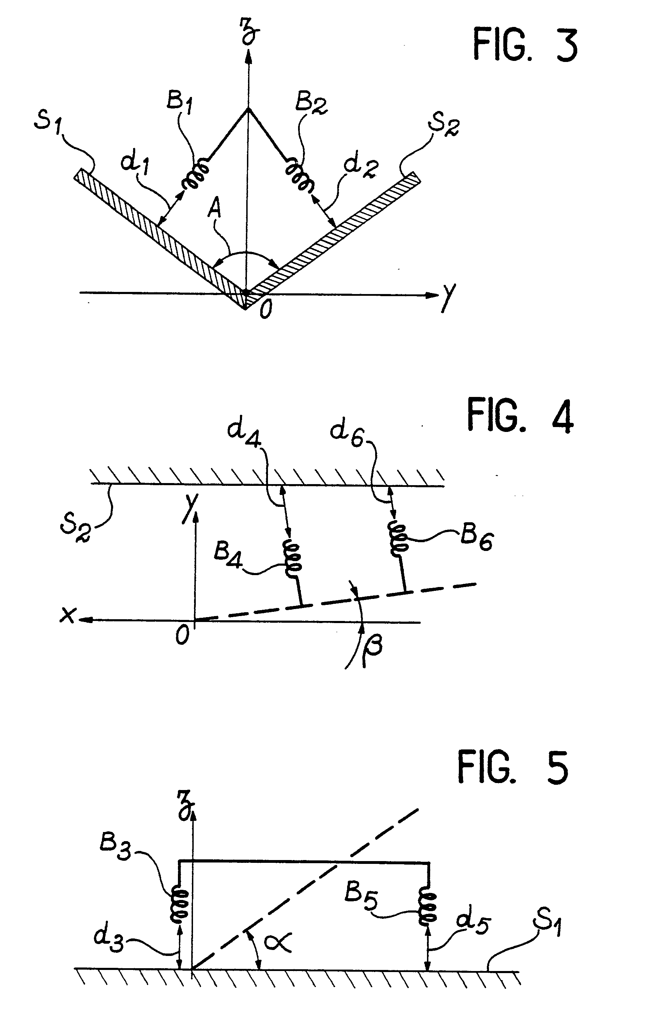

Il faut noter que conformément à l'invention, l'exactitude de l'orientation angulaire $\alpha$ constitue bien la première condition à vérifier. En effet, les autres contrôles qui doivent être effectués à l'aide du capteur C supposent, notamment en ce qui concerne le positionnement latéral et en hauteur du capteur et de la torche qui vont maintenant être décrits en se référant à la figure 3, que l'orientation du capteur dans le plan transversal contenant les bobines $B_1$ à $B_4$ soit satisfaisante.

Ces deux positionnements sont réalisés comme l'illustre la figure 3 à l'aide des mesures des distances $d_1$ et $d_2$ qui sont effectuées à partir des bobines $B_1$ et $B_2$. Ainsi, et dans le mesure où l'orientation angulaire $\alpha$ est correcte, le calcul de $d_1 - d_2$ et la comparaison de cette différence à une valeur de consigne y permet d'effectuer le calage latéral de la torche et du capteur selon une direction parallèle à la bissectrice extérieure de l'angle formé entre deux bobines correspondantes des jeux de bobines $B_1B_3$, $B_2B_4$, $B_3B_5$ et $B_4B_6$ (par exemple angle des axes de $B_1$ et $B_2$). L'amplitude et le signe du signal d'erreur $d_1 - d_2 - y$ ainsi calculé déterminent l'amplitude et le sens du déplacement en translation à commander à l'aide de l'ensemble moteur correspondant $M_y$ (définition analogue à celle de l'ensemble moteur $M_\alpha$).

De façon comparable, le calcul de la somme $d_1 + d_2$ et la comparaison de cette somme à une valeur de consigne h permet d'effectuer le calage de la torche et du capteur à la hauteur h souhaitée. Ce calage en hauteur s'effectue selon la bissectrice intérieure de l'angle formé entre les axes de bobines $B_1$ et $B_2$ (ou $B_3$ et $B_4$), dans le plan transversal de la figure 3 contenant les bobines $B_1$ et $B_2$.

L'amplitude et le signe du signal d'erreur $d_1 + d_2 - h$ ainsi calculé indiquent l'amplitude et le sens du mouvement élémentaire de translation à réaliser à l'aide de l'ensemble moteur $M_z$ correspondant.

En se référant maintenant à la figure 4, on voit que la mesure des distances $d_4$ et $d_6$ séparant les bobines $B_4$ et $B_6$ de la surface $S_2$ en vis-à-vis permet, en calculant la différence $d_4 - d_6$ et en comparant cette différence à une valeur de consigne $\beta$, de réaliser l'orientation angulaire de la torche et du capteur autour d'un axe parallèle à la bissectrice intérieure de l'angle formé entre les axes des bobines $B_1$ et $B_2$ (ou $B_3$ et $B_4$), dans le plan transversal contenant les bobines $B_1$ à $B_4$. Comme précédemment, la valeur et le signe du signal d'erreur $d_4 - d_6 - \beta$ déterminent l'amplitude et le sens du mouvement élémentaire à effectuer sur la torche et sur le capteur à l'aide de l'ensemble moteur $M_\beta$ correspondant.

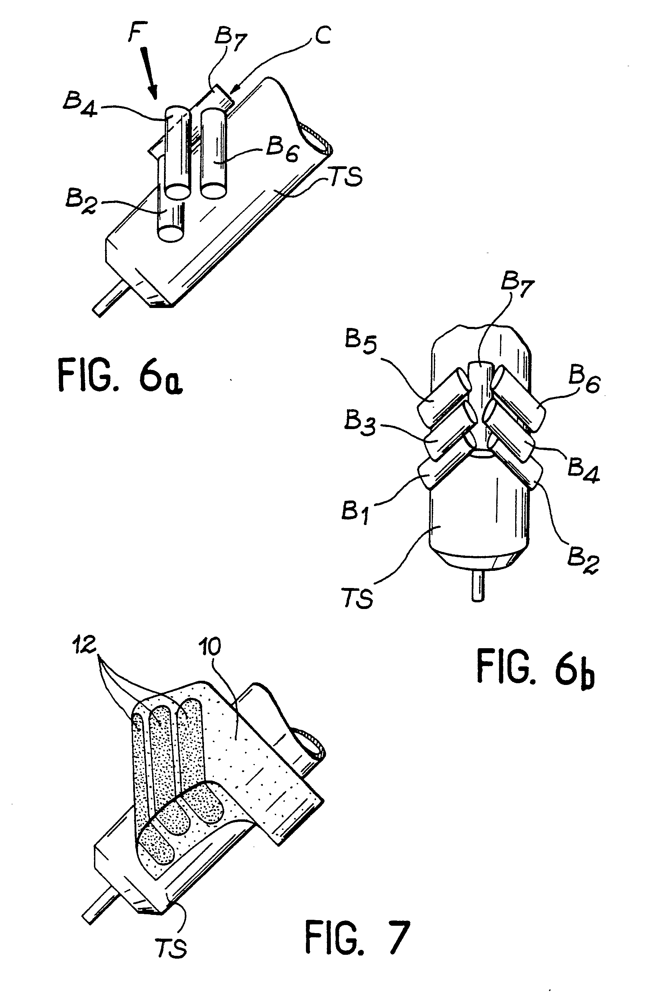

Enfin, on voit sur la figure 5 que la mesure des distances $d_3$ et $d_5$ séparant les bobines $B_3$ et $B_5$ de la surface $S_1$ permet d'effectuer l'orientation angulaire $\gamma$ de la torche et du capteur autour d'un axe parallèle au plan transversal contenant les bobines $B_1$ à $B_4$ et perpendiculaire à la bissectrice intérieure de l'angle formé entre les axes des bobines $B_1$ et $B_2$ (ou $B_3$ et $B_4$) dans ce plan. En effet, le calcul de la différence $d_3 - d_5$, puis la comparaison de cette différence à une valeur de consigne $\gamma$ permet de déterminer le signal d'erreur correspondant $d_3 - d_5 - \gamma$ dont l'amplitude et le signe déterminent respectivement l'amplitude et le sens du mouvement élémentaire à commander au moyen de l'ensemble moteur $M_\gamma$ pour obtenir l'orientation souhaitée.

Pour l'ensemble des mouvements de correction d'erreur dont le principe vient d'être exposé en se référant aux figures 2 à 5, il faut noter que les valeurs de consigne $\alpha$, y, h, $\beta$ et $\gamma$ sont déterminées à l'avance en fonction de la passe de soudure à réaliser. Cette détermination peut notamment être faite par apprentissage ou par programmation.

Dans la mesure où toutes ces valeurs de consigne sont nulles, le capteur C doit normalement se retrouver dans la position de référence de la figure 1 et on peut considérer, aux corrections suivantes près, que l'orientation angulaire $\alpha$ s'effectue autour d'un axe parallèle à l'axe Ox, que l'orientation angulaire $\beta$ s'effectue autour d'un axe parallèle à l'axe Oz et que l'orientation angulaire $\gamma$ s'effectue autour d'un axe parallèle à l'axe Oy. En outre, le calage latéral s'effectue alors parallèlement à l'axe Oy tandis que le calage en hauteur s'effectue parallèlement à l'axe Oz. Cette situation correspond à celle qui a été représentée pour simplifier sur les figures 2 à 5.

De plus, la validité des corrections apportées à l'aide du dispositif selon l'invention suppose également que les trois orientations angulaires soient réalisées de telle sorte que les mouvements de rotation correspondants soient centrés autour de l'extrémité de la torche, de manière à ne pas perdre la référence de position de cette dernière pendant les mouvements de rotation.

On a représenté sur les figures 6a, 6b et 7 un exemple d'implantation du capteur selon l'invention sur une torche de soudage $T_S$. Ainsi, on voit sur les figures 6a et 6b le principe d'implantation des bobines $B_1$ à $B_6$ sur la torche de soudage $T_S$, en rappelant que l'angle formé respectivement entre les bobines $B_1$ et $B_2$, $B_3$ et $B_4$ et $B_5$ et $B_6$ est déterminé par l'angle A formé entre les tôles et, de façon plus précise, complémentaire de cet angle A. On voit également sur les figures 6a et 6b que dans ce type d'application, on peut prévoir d'adjoindre aux bobines de mesure $B_1$ à $B_6$ une bobine $B_7$ de compensation en température qui est disposée selon l'axe de la torche et à proximité de la surface de celle-ci pour faciliter la prise de température.

En pratique, on voit sur la figure 7 que l'implantation des bobines $B_1$ à $B_7$ illustrée sur les figures 6a et 6b peut être obtenue au moyen d'une bague de céramique 10 qui vient s'ajuster sur la buse de la torche $T_S$, celle-ci étant de préférence refroidie. Les bobines $B_1$ à $B_7$ sont de préférence maintenues en place dans la bague 10 au moyen de résine réfractaire 12 dans laquelle elles sont noyées.

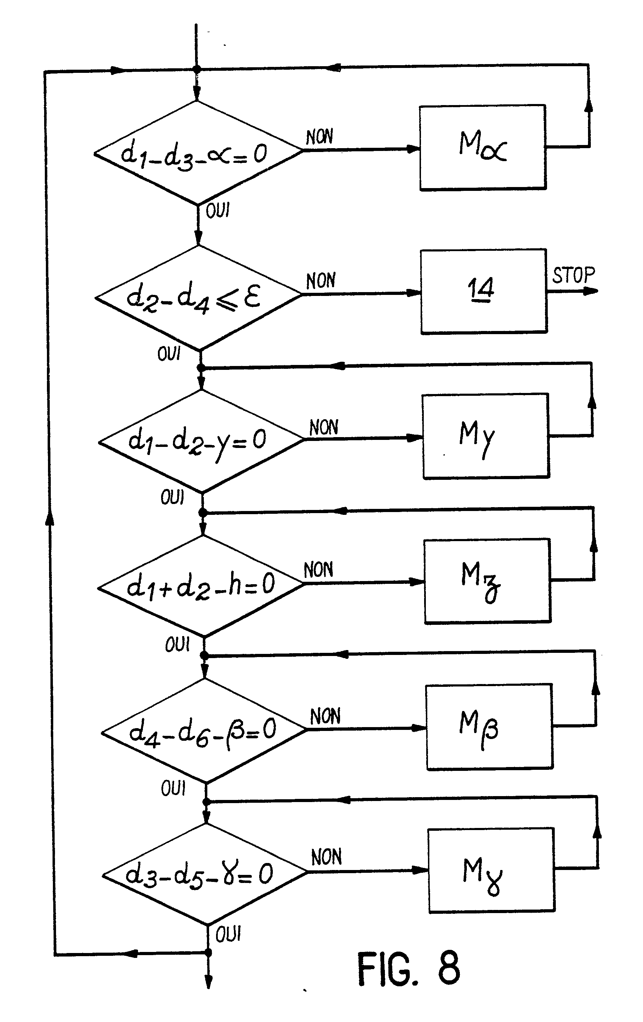

On a représenté sur la figure 8 l'organigramme de commande du dispositif selon l'invention. Cet organigramme se caractérise par l'ordre des opérations qui a déjà été évoqué précédemment. En pratique, la réalisation des mouvements élémentaires sur les robots demande une commande informatique évoluée ou une mécanique permettant une commande découplée de l'orientation et du positionnement de la torche de soudage.

A partir d'un positionnement initial donné, on voit sur la figure 8 que la première opération consiste à calculer la différence $d_1 - d_3 - \alpha$. Lorsque cette différence n'est pas nulle, on effectue un mouvement élémentaire à l'aide de l'ensemble moteur correspondant $M_\alpha$ et on revient à la situation initiale.

Au contraire, lorsque cette différence est nulle, on passe à l'opération suivante qui consiste à comparer la différence $d_2 - d_4$ à la valeur de consigne $\varepsilon$. Lorsque cette différence est supérieure à $\varepsilon$, on actionne une alarme 14 et on déclenche l'arrêt du robot ou de la machine équipée de ce dispositif. En effet, on se trouve alors dans le cas où les déformations des tôles à souder sont trop importantes pour que les calculs des corrections effectuées à l'aide du dispositif puissent être considérées comme valables.

Lorsque $d_2 - d_4$ est inférieur ou égal à $\varepsilon$, on passe à l'opération suivante qui consiste à calculer $d_1 - d_2 - y$. Lorsque le calage latéral ainsi contrôlé n'est pas correct, c'est-à-dire lorsque la différence calculée n'est pas nulle, on commande le déplacement élémentaire de la torche et du capteur à l'aide de l'ensemble moteur correspondant $M_y$ et on recommence le contrôle de ce calage latéral.

Au contraire, lorsque la différence $d_1 - d_2 - y$ est nulle, on passe à l'étape de contrôle suivante. Comme on l'a vu, cette étape de contrôle correspond au positionnement en hauteur de la torche et se concrétise par le calcul de $d_1 + d_2 - h$. Lorsque la valeur calculée n'est pas nulle, on agit sur l'ensemble moteur $M_z$ correspondant et on recommence le contrôle du calage en hauteur.

Lorsque ce calage est correct, on contrôle le calage angulaire $\beta$ en calculant la différence $d_4 - d_6 - \beta$ et on actionne l'ensemble moteur $M_\beta$ correspondant lorsque cette différence n'est pas nulle.

Au contraire, lorsque cette différence est nulle, on passe à la dernière étape du contrôle qui concerne le contrôle de l'orientation angulaire $\gamma$. Ce contrôle s'effectue comme on l'a vu en calculant $d_3 - d_5 - \gamma$ et en agissant sur l'ensemble moteur correspondant $M_\gamma$ lorsque cette différence n'est pas nulle. Dans ce cas, on effectue ensuite un nouveau contrôle de l'orientation angulaire $\gamma$.

Lorsque la valeur calculée est nulle, c'est-à-dire lorsque l'orientation angulaire $\gamma$ est correcte, on revient au point de départ de l'organigramme pour effectuer une nouvelle série de contrôles dans l'ordre ainsi déterminé.

Comme on l'a déjà mentionné précédemment, les mesures et les actions élémentaires successives de cet organigramme sont combinées de telle manière qu'elles rendent valides les mesures suivantes. Ainsi, on a vu que les mesures effectuées sur les bobines $B_1$, $B_2$, $B_3$ et $B_4$ permettent de déterminer les écarts d'orientation et de position $\Delta_\alpha$, $\Delta_y$ et $\Delta_z$. La commande doit prendre en compte ces mesures et déterminer les mouvements à effectuer. De ce point de vue, la commande la plus efficace est celle qui consiste à orienter d'abord le capteur et la torche pour tenir compte de l'erreur d'orientation $\Delta_\alpha$, de manière à ce que les mesures des écarts $\Delta_y$ et $\Delta_z$ soient valides et que les mouvements de correction puissent être effectués.

L'organigramme de commande de la figure 8 présente également pour caractéristique essentielle le fait que les mesures sont découplées, c'est-à-dire que l'apparente redondance du nombre de bobines utilisées est nécessitée par le découplage des mesures qui permet d'associer à chaque mouvement élémentaire une mesure bien définie effectuée sur un couple de bobines particulier. Ce découplage permet de ne pas avoir d'ambiguïté de commande. Ainsi, on peut noter à titre d'exemple que la disposition symétrique des bobines ne permet pas a priori de faire une distinction fonctionnelle entre le couple de bobines $B_4$, $B_6$ et le couple $B_3$, $B_5$, de telle sorte que si les ensembles moteurs $M_\beta$ et $M_\gamma$ étaient commandés par un seul couple de bobines, il ne serait pas possible de déterminer lequel de ces ensembles moteurs doit être actionné. Au contraire, selon l'invention, chacun de ces ensembles moteurs est commandé par un signal d'erreur calculé à partir d'un couple de bobines spécifique, à savoir $B_4B_6$ pour les ensembles moteurs $M_\beta$ et $B_3B_5$ pour les ensembles moteurs $M_\gamma$.

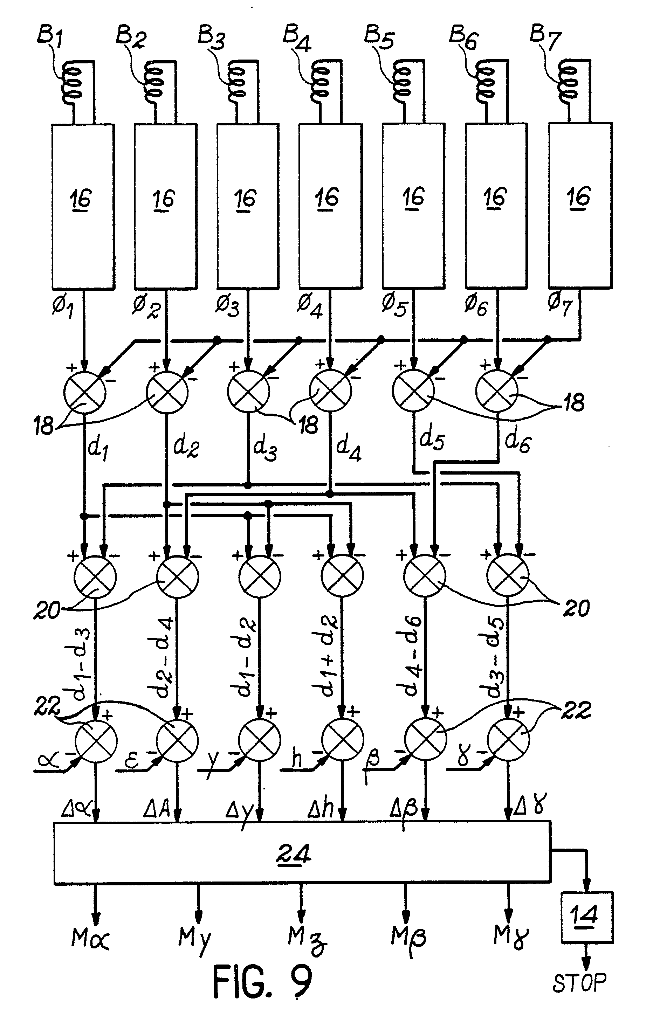

Enfin, on a représenté sur la figure 9 et de façon schématique l'ensemble du dispositif selon l'invention regroupant à la fois les bobines $B_1$ à $B_7$ du capteur, les circuits électroniques associés à ce dernier, et les ensembles moteurs assurant la commande des mouvements élémentaires de manière à asservir la torche aux signaux d'erreurs calculés par les circuits électroniques.

Ainsi, on voit sur la figure 9 qu'à chacune des bobines à courants de Foucault $B_1$ à $B_7$ est associé un circuit de traitement de signal 16. Les circuits de traitement 16 sont tous identiques et réalisent une mesure différentielle de phases de manière à associer à chacune des bobines $B_1$ à $B_7$ un signal $\emptyset_1$ à $\emptyset_7$, chaque signal $\emptyset_1$ à $\emptyset_6$ étant représentatif de la distance séparant la bobine correspondante de la surface en vis-à-vis, aux corrections de température près. Chacun des circuits de traitement 16 peut être réalisé de façon connue, par exemple comme on l'a décrit dans la demande FR-A-2 477 935 (EP-A-36 358) au nom du Commissariat à l'Energie Atomique.

En variante, on comprendra que les sept circuits de traitement 16 peuvent être remplacés par un circuit de traitement de signal unique associé à des moyens de multiplexage.

Dans le mode de réalisation représenté, on effectue une correction en température et une bobine $B_7$ et son circuit de traitement 16 sont prévus à cet effet. On voit sur la figure 9 que le signal de correction en température $\emptyset_7$ délivré par le circuit de traitement correspondant est soustrait de chacun des signaux $\emptyset_1$ à $\emptyset_6$ dans une première série de six additionneurs 18. Ces additionneurs délivrent ainsi des signaux de proximité corrigés qui représentent effectivement les distances $d_1$ à $d_6$ séparant chaque bobine $B_1$ à $B_6$ de la surface en vis-à-vis.

Ces signaux $d_1$ à $d_6$ sont ensuite combinés dans une deuxième série de six additionneurs 20, de manière à calculer séparément les valeurs de $d_1 - d_3$, $d_2 - d_4$, $d_1 - d_2$, $d_1 + d_2$, $d_4 - d_6$ et $d_3 - d_5$.

Dans une troisième série de six additionneurs 22, on retranche à chacun des signaux ainsi calculés respectivement les valeurs de consigne $\alpha$, $\varepsilon$, y, h, $\beta$ et $\gamma$. On obtient ainsi séparément les signaux de commande $\Delta_\alpha$, $\Delta A$, $\Delta_y$, $\Delta_h$, $\Delta_\beta$ et $\Delta_\gamma$ représentatifs des erreurs sur l'orientation $\alpha$, sur l'angle A, sur le positionnement latéral y, sur le positionnement en hauteur h et sur les orientations $\beta$ et $\gamma$. Ces signaux sont introduits dans un dispositif logique de commande 24 permettant d'effectuer les commandes des ensembles moteurs élémentaires correspondants $M_\alpha$, $M_y$, $M_z$, $M_\beta$ et $M_\gamma$, dans l'ordre établi par l'organigramme de la figure 8. Ce dispositif logique sera choisi parmi les appareils connus selon la complexité de la machine à commander. On voit aussi sur la figure 9 que le dispositif logique de commande 24 sert également à commander l'alarme 14 et l'arrêt de la machine lorsque le signal $\Delta A$ est positif.

Bien entendu, l'invention n'est pas limitée au mode de réalisation qui vient d'être décrit à titre d'exemple, mais en couvre toutes les variantes. En particulier, on comprendra que l'ordre de certaines des opérations effectuées par le dispositif selon l'invention peut être inversé sans que l'exactitude des opérations suivantes en soit affectée. C'est notamment le cas des opérations de calage latéral et en hauteur et des opérations d'orientation angulaire $\beta$ et $\gamma$ qui peuvent les unes et les autres être inversées sans affecter le fonctionnement du dispositif. D'autre part, bien que l'invention soit particulièrement adaptée à une machine de soudage automatique, elle n'est pas limitée à cette application et peut être utilisée dans tous les cas où un outil doit être maintenu selon une orientation bien définie par rapport à deux surfaces métalliques localement planes formant entre elles un angle quasi constant, sur une machine automatique.

**Revendications**

1. Dispositif de positionnement d'un organe ($T_S$) par rapport à deux surfaces conductrices localement planes ($S_1$, $S_2$) définissant une ligne de joint (J) et formant entre elles un angle (A) déterminé, comprenant un capteur (C) à courants de Foucault assujetti audit organe, des moyens de commande d'asservissement (16 à 24) sensibles aux signaux délivrés par le capteur pour élaborer des signaux de commande de position ($\Delta_\alpha$, $\Delta_y$, $\Delta_h$, $\Delta_\beta$, $\Delta_\gamma$) dudit organe, et des moyens moteurs ($M_\alpha$, $M_y$, $M_z$, $M_\beta$, $M_\gamma$) sensibles aux signaux de commande pour positionner le capteur et ledit organe, caractérisé en ce que le capteur comprend une première paire de bobines ($B_1$, $B_3$) parallèles entre elles et disposées dans un même plan dit « transversal », une deuxième paire de bobines ($B_2$, $B_4$) disposée dans le même plan transversal que la première paire de bobines et formant avec celle-ci un angle complémentaire de l'angle (A) formé entre les surfaces, une cinquième bobine ($B_5$) parallèle à l'une ($B_3$) des bobines de la première paire et disposée avec celle-ci dans un plan perpendiculaire au plan transversal et une sixième bobine ($B_6$) parallèle à l'une ($B_4$) des bobines de la deuxième paire et disposée avec celle-ci dans un deuxième plan perpendiculaire au plan transversal, les moyens de commande d'asservissement comprenant des moyens de traitement (16) des signaux émis par les bobines délivrant, pour chacune d'entre elles, un signal de proximité représentatif de la distance ($d_1$ à $d_6$) qui la sépare de la surface en vis-à-vis, des moyens de calcul (20, 22) élaborant les signaux de commande à partir de certains des signaux de proximité pris deux à deux, et des moyens (24) pour subordonner la transmission d'un signal de commande aux moyens moteurs qui lui correspondent à la mise en œuvre de moyens moteurs précédents, selon un ordre déterminé, un décalage éventuel entre l'une au moins desdites bobines et les orientations relatives de celles-ci définies précédemment étant pris en compte par lesdits moyens de traitement (16), de telle sorte que les signaux de proximité délivrés par ces derniers soient identiques à ceux obtenues avec des bobines présentant lesdites orientations relatives.

2. Dispositif selon la revendication 1, caractérisé en ce que les moyens moteurs comprennent, selon ledit ordre déterminé par les moyens de subordination, un premier ensemble de moyens d'orientation angulaire ($M_\alpha$) autour d'un axe perpendiculaire au plan transversal, un ensemble de moyens de positionnement latéral ($M_y$) selon une direction perpendiculaire à la bissectrice de l'angle formé entre les bobines correspondantes ($B_1$, $B_2$ et $B_3$, $B_4$) des première et deuxième paires de bobines dans ledit plan transversal, un ensemble de moyens de positionnement en hauteur ($M_z$) selon une direction parallèle à ladite bissectrice, dans ledit plan transversal, un deuxième ensemble de moyens d'orientation angulaire ($M_\beta$) autour d'un axe parallèle à ladite bissectrice, et un troisième ensemble de moyens d'orientation angulaire ($M_y$) autour d'un axe parallèle au plan transversal et perpendiculaire à ladite bissectrice, et en ce que les axes de pivotement définis par lesdits ensembles de moyens d'orientation angulaire passent par l'extrémité dudit organe.

3. Dispositif selon la revendication 2, caractérisé en ce que les moyens de calcul comprennent, selon ledit ordre déterminé par les moyens de subordination, un moyen (20) pour calculer la différence entre les signaux de proximité ($d_1$, $d_3$) correspondant aux bobines ($B_1$, $B_3$) de la première paire de bobines, un moyen (20) pour calculer la différence entre les signaux de proximité ($d_1$, $d_2$) correspondant à une bobine ($B_1$) de la première paire et à une bobine ($B_2$) de la deuxième paire, un moyen (20) pour calculer la somme de ces derniers signaux de proximité ($d_1$, $d_2$), un moyen (20) pour calculer la différence entre les signaux de proximité ($d_4$, $d_6$) correspondant à la sixième bobine ($B_6$) et à la bobine ($B_4$) de la deuxième paire qui lui est parallèle, et un moyen (20) pour calculer la différence entre les signaux de proximité ($d_3$, $d_5$) correspondant à la cinquième bobine ($B_5$) et à la bobine ($B_3$) de la première paire qui lui est parallèle, et en ce que les moyens de calcul comprennent de plus, pour chacun de ces derniers moyens, un moyen (22) pour comparer la différence ou la somme calculée à une valeur de consigne ($\alpha$, y, h, $\beta$, $\gamma$) afin d'élaborer lesdits signaux de commande.

4. Dispositif selon la revendication 3, caractérisé en ce que les moyens de calcul comprennent de plus, après ledit moyen pour calculer la différence entre les signaux de proximité ($d_1$, $d_3$) correspondant aux bobines de la première paire selon ledit ordre déterminé par les moyens de subordination (24), un moyen (20) pour calculer la différence entre les signaux de proximité ($d_2$, $d_4$) correspondant aux bobines de la deuxième paire, et un moyen (22) pour comparer la différence ainsi calculée à une valeur d'erreur ($\varepsilon$), et en ce que le dispositif comprend de plus un système d'alarme (14) dont la mise en œuvre est commandée par ce dernier moyen lorsque la différence calculée est supérieure au signal d'erreur.

5. Dispositif selon l'une quelconque des revendications précédentes, caractérisé en ce que le capteur comprend de plus une bobine ($B_7$) de compensation en température.

6. Dispositif selon la revendication 5, appliqué à l'orientation d'une torche de soudage ($T_S$), caractérisé en ce que le capteur comprend une bague (10) en matière céramique fixée sur la torche, la bague portant lesdites bobines de telle sorte que la bobine ($B_7$) de compensation en température soit à proximité de la surface de la torche.

7. Procédé de mise en œuvre d'un dispositif d'orientation d'un organe selon l'une quelconque des revendications précédentes, caractérisé en ce qu'il consiste à :

élaborer, pour chaque bobine du capteur, un signal de proximité ($d_1$ à $d_6$) représentatif de la distance séparant cette bobine de la surface en vis-à-vis,

élaborer les signaux de commande d'orientation ($\Delta_\alpha$, $\Delta_y$, $\Delta_h$, $\Delta_\beta$, $\Delta_y$) dudit organe à partir de certains des signaux de proximité pris deux à deux, et

subordonner la transmission d'un signal de commande à l'ensemble de moyens moteurs ($M_\alpha$, $M_y$, $M_z$, $M_\beta$, $M_y$) qui lui correspond à la mise en œuvre d'un ensemble de moyens moteurs précédent, selon un ordre déterminé.

8. Procédé selon la revendication 7, caractérisé en ce qu'on effectue successivement :

l'orientation angulaire ($\alpha$) autour d'un axe perpendiculaire au plan transversal et passant par l'extrémité dudit organe,

le positionnement latéral (y) selon une direction perpendiculaire à la bissectrice de l'angle formé entre les bobines correspondantes des première et deuxième paires de bobines, dans ledit plan transversal,

le positionnement en hauteur (h) selon une direction parallèle à ladite bissectrice, dans ledit plan transversal,

l'orientation angulaire ($\beta$) autour d'un axe parallèle à ladite bissectrice et passant par l'extrémité dudit organe, et

l'orientation angulaire ($\gamma$) autour d'un axe parallèle audit plan transversal, perpendiculaire à ladite bissectrice et passant par l'extrémité dudit organe.

9. Procédé selon la revendication 8, caractérisé en ce que, après avoir effectué l'orientation angulaire ($\alpha$), on contrôle l'angle (A) formé entre les surfaces, et en ce qu'on déclenche une alarme (14) lorsque l'écart ($\Delta A$) entre l'angle réel et l'angle initial dépasse une valeur déterminée.

**Claims**

1. Device for the positioning of a member ($T_S$) with respect to two locally plane conducting surfaces ($S_1$, $S_2$) defining a joint line (J) and between them forming a specified angle (A), including an eddy current sensor (C) tied to the said member, means of control (16 to 24) sensitive to the signals delivered by the sensor for the generation of position control signals ($\Delta_\alpha$, $\Delta_y$, $\Delta_h$, $\Delta_\beta$, $\Delta_y$) of the said member, and driving means ($M_\alpha$, $M_y$, $M_z$, $M_\beta$, $M_y$) sensitive to the control signals for positioning the sensor and the said member, characterized in that the sensor includes a first pair of coils ($B_1$, $B_3$) parallel to each other and arranged in a same « transverse » plane, a second pair of coils ($B_2$, $B_4$) arranged in the same transverse plane as the first pair of coils and forming with the latter an angle that is complementary to the angle (A) formed between the surfaces, a fifth coil ($B_5$) parallel to one ($B_3$) of the coils of the first pair and arranged with the latter . in a plane perpendicular to the transverse plane and a sixth coil ($B_6$) parallel to one ($B_4$) of the coils of the second pair and arranged with the latter in a second plane perpendicular to the transverse plane, the means of control including means of processing (16) the signals transmitted by the coils delivering, for each of them, a proximity signal representing the distance ($d_1$ to $d_6$) which separates it from the surface facing it, means of computation (20, 22) generating the control signals from certain of the proximity signals taken two by two, and means (24) of subordinating the transmission of a control signal to the driving means corresponding thereto to the setting to work of previous driving means, according to a specified order, a possible offset between one at least of the said coils and the previously defined relative orientations of the latter being taken into account by the said means of processing (16), such that the proximity signals delivered by the latter are identical to those obtained with coils having the said relative orientations.

2. Device according to Claim 1, characterized in that the driving means include, according to the said order determined by the means of subordination, a first set of angular orientation means ($M_\alpha$) about an axis perpendicular to the transverse plane, a set of means of lateral positioning ($M_y$) according to a direction perpendicular to the bisector of the angle formed between the corresponding coils ($B_1$, $B_2$ and $B_3$, $B_4$) of the first and second pairs of coils in the said transverse plane, a set of means of height positioning ($M_z$) according to a direction parallel to the said bisector, in the said transverse plane, a second set of means of angular orientation ($M_\beta$) about an axis parallel to the said bisector, and a third set of means of angular orientation ($M_y$) about an axis parallel to the transverse plane and perpendicular to the said bisector, and in that the pivoting axes defined by the said sets of means of angular orientation pass through the end of the said member.

3. Device according to Claim 2, characterized in that the means of computation include, according to the said order determined by the means of subordination, a means (20) for computing the difference between the proximity signals ($d_1$, $d_3$) corresponding to the coils ($B_1$, $B_3$) of the first pair of coils, a means (20) for computing the difference between the proximity signals ($d_1$, $d_2$) corresponding to a coil ($B_1$) of the first pair and a coil ($B_2$) of the second pair, a means (20) for computing the sum of the latter proximity signals ($d_1$, $d_2$), a means (20) for computing the difference between the proximity signals ($d_4$, $d_6$) corresponding to the sixth coil ($B_6$) and with the coil ($B_4$) of the second pair which is parallel to it, and a means (20) for computing the difference between the proximity signals ($d_3$, $d_5$) corresponding to the fifth coil ($B_5$) and with the coil ($B_3$) of the first pair which is parallel to it, and in that the means of computation also include, for each of the latter means, a means (22) for comparing the difference or the computed sum with a command value ($\alpha$, y, h, $\beta$, $\gamma$) in order to generate the said control signals.

4. Device according to Claim 3, characterized in that the means of computation also include, after the said means for computing the difference between the proximity signals ($d_1$, $d_3$) corresponding to the coils of the first pair according to the said specified order by the means of subordination (24), a means (20) for computing the difference between the signals ($d_2$, $d_4$) corresponding to the coils of the second pair, and a means (22) for comparing the difference thus computed with an error value ($\epsilon$), and in that the device also includes an alarm system (14) whose implementation is controlled by the latter means when the computed difference is greater than the error signal.

5. Device according to any of the previous claims, characterized in that the sensor also includes a temperature compensation coil ($B_7$).

6. Device according to Claim 5, applied to the orientation of a welding torch ($T_S$), characterized in that the sensor includes a ring (10) made of ceramic material fixed to the torch, the ring carrying the said coils in such a way that the temperature compensation coil ($B_7$) is close to the surface of the torch.

7. Process for implementing a device for the orientation of a member according to any of the previous claims, characterized in that it consists in :

generating, for each coil of the sensor, a proximity signal ($d_1$ to $d_6$) representing the distance separating that coil from the surface facing it,

generating the orientation control signals ($\Delta_\alpha$, $\Delta_y$, $\Delta_h$, $\Delta_\beta$, $\Delta_\gamma$) of the said member from certain of the proximity signals taken two by two, and

subordinating the transmission of a control signal to the set of driving means ($M_\alpha$, $M_y$, $M_z$, $M_\beta$, $M_\gamma$) which corresponds thereto to the putting to work of a previous set of driving means, according to a specified order.

8. Process according to Claim 7, characterized in that the following are carried out in succession :

the angular orientation ($\alpha$) about an axis perpendicular to the transverse plane and passing through the end of the said member,

the lateral positioning (y) in a direction perpendicular to the bisector of the angle formed between the corresponding coils of the first and second pairs of coils, in the said transverse plane,

the heigth positioning (h) in a direction parallel to the said bisector, in the said transverse plane,

the angular orientation ($\beta$) about an axis parallel to the said bisector and passing through the end of the said member, and

the angular orientation ($\gamma$) about an axis parallel to the said transverse plane, perpendicular to the said bisector and passing through the end of the said member.

9. Process according to Claim 8, characterized in that, after having carried out the angular orientation ($\alpha$), the angle (A) formed between the surface is checked, and in that an alarm (14) is triggered when the difference ($\Delta A$) between the real angle and the initial angle exceeds a specified value.

**Patentansprüche**

1. Vorrichtung zum Positionieren eines Organs ($T_S$) in Bezug auf zwei leitende, örtlich ebene Oberflächen ($S_1$, $S_2$), die eine Verbindungslinie (J) bestimmen und zwischen sich einen bestimmten Winkel (A) bilden, mit einem dem Organ ausgesetzten Wirbelstromfühler (C), mit für von dem Fühler gelieferte Signale empfindlichen Regelungssteuermitteln (16-24), um die Positionierungssteuersignale ($\Delta_a$, $\Delta_y$, $\Delta_h$, $\Delta_\beta$, $\Delta_\gamma$) des Organs zu bestimmen, und Antriebsmitteln ($M_a$, $M_y$, $M_z$, $M_\beta$, $M_\gamma$), die auf die Steuersignale ansprechen, um den Fühler und das Organ zu positionieren dadurch gekennzeichnet, daß der Fühler ein erstes Paar Spulen ($B_1$, $B_3$), die parallel zueinander und in einer gleichen, querverlaufend genannten Ebene angeordnet sind, ein zweites Paar Spulen ($B_2$, $B_4$), die in der gleichen querverlaufenden Ebene wie das erste Spulenpaar angeordnet sind und mit diesem einen zu dem zwischen den zwei Oberflächen gebildeten Winkel (A) komplementären Winkel bilden, eine fünfte Spule ($B_5$), die parallel zu einer ($B_3$) der Spulen des ersten Paares verläuft und mit dieser in einer zu der querverlaufenden Ebene senkrechten Ebene angeordnet ist, und eine sechste Spule ($B_6$), die parallel zu einer ($B_4$) der Spulen des zweiten Paares verläuft und mit dieser in einer zweiten zu der querverlaufenden Ebene senkrechten Ebene angeordnet ist, umfaßt, und daß die Regelungssteuermittel umfassen Verarbeitungsmittel (16) für, die von den Spulen abgegebenen Signale, die für jede Spule ein Nähesignal abgibt, das repräsentativ für den Abstand ($d_1$ bis $d_6$) ist, der die Spule von der gegenüberliegenden Oberfläche trennt, Rechenmittel (20, 22), die die Steuersignale aufgrund gewisser der paarweise genommenen Nähesignale bestimmen, und Mittel (24), um die Übertragung eines Steuersignals zu den Antriebsmitteln, die ihm entsprechen, gemäß einer bestimmten Reihenfolge der Inbetriebnahme der vorhergehenden Antriebsmittel unterzuordnen, und daß eine mögliche Verschiebung zwischen wenigstens einer der Spulen und ihren vorhergehend bestimmten relativen Ausrichtungen durch Verarbeitungsmittel (16) berücksichtigt wird derart, daß die von diesen Spulen gelieferten Nähesignale mit denjenigen identisch sind, die von Spulen erhalten worden sind, die die genannten relativen Ausrichtungen aufweisen.

2. Vorrichtung nach Anspruch 1, dadurch gekennzeichnet, daß die Antriebsmittel gemäß der durch die Unterordnungsmittel festgelegten Reihenfolge umfassen eine erste Gesamtheit von Winkelausrichtmitteln ($M_\alpha$) um eine zu der querverlaufenden Ebene senkrechte Achse, eine Gesamtheit von seitlichen Positionierungsmitteln ($M_y$) längs einer Richtung, die senkrecht zu der Winkelhalbierenden des zwischen den entsprechenden Spulen ($B_1$, $B_2$ und $B_3$, $B_4$) des ersten und zweiten Spulenpaares in der querverlaufenden Ebene gebildeten Winkels ist, eine Gesamtheit von Höhenpositionierungsmittel ($M_z$) längs einer zu der Winkelhalbierenden parallelen Richtung in der querverlaufenden Ebene, eine zweite Gesamtheit von Winkelausrichtmitteln ($M_\beta$) um eine zu der Winkelhalbierenden parallelen Achse, und eine dritte Gesamtheit von Winkelausrichtmitteln ($M_\gamma$) um eine zu der querverlaufenden Ebene parallele und zu der Winkelhalbierenden senkrechte Achse, und daß die durch die Gesamtheiten von Winkelausrichtmitteln festgelegten Schwenkachsen durch das Ende des Organs hindurchgehen.

3. Vorrichtung nach Anspruch 2, dadurch gekennzeichnet, daß die Rechenmittel gemäß der durch die Unterordnungsmittel festgelegten Reihenfolge umfassen eine Einrichtung (20) zum Berechnen der Differenz zwischen den Nähesignalen ($d_1$, $d_3$), die den Spulen ($B_1$, $B_3$) des ersten Spulenpaares entsprechen, einer Einrichtung (20) zum Berechnen der Differenz zwischen den Nähesignalen ($d_1$, $d_2$), die einer Spule ($B_1$) des ersten Paares und einer Spule ($B_2$) des zweiten Paares entsprechen, einer Einrichtung (20) zum Berechnen der Summe dieser letzteren Nähesignale ($d_1$, $d_2$), einer Einrichtung (20) zum Berechnen der Differenz zwischen den Nähesignalen ($d_4$, $d_6$), die der sechsten Spule ($B_6$) und der Spule ($B_4$) des zweiten Paares, die zu ihr parallel verläuft, entsprechen, und einer Einrichtung (20) zum Berechnen der Differenz zwischen den Nähesignalen ($d_3$, $d_5$), die der fünften Spule ($B_5$) und der dazu parallelen Spule ($B_3$) des ersten Paares entsprechen, und daß die Rechenmittel zusätzlich für jede dieser letzten Einrichtungen eine Einrichtung (22) umfassen, um die berechnete Differenz oder berechnete Summe mit einem Einstellwert ($\alpha$, y, h, $\beta$, $\gamma$) zu vergleichen, um die Steuersignale zu bestimmen.

4. Vorrichtung nach Anspruch 3, dadurch gekennzeichnet, daß die Rechenmittel ferner nach der Berechnungseinrichtung zum Berechnen der Differenz zwischen den den Spulen des ersten Paares entsprechenden Nähesignalen ($d_1$, $d_3$) gemäß der durch die Unterordnungsmittel (24) festgelegten Reihenfolge eine Berechnungseinrichtung (20) für die Differenz zwischen den Spulen des zweiten Paares entsprechenden Nähesignalen ($d_2$, $d_4$) und eine Vergleichseinrichtung (22) für die so berechnete Differenz mit einem Fehlerwert ($\epsilon$) aufweisen, und daß die Vorrichtung ferner ein Warnsystem (14) aufweist, dessen Inbetriebnahme durch die letztere Einrichtung gesteuert wird, wenn die berechnete Differenz größer als das Fehlersignal ist.

5. Vorrichtung nach einem der vorhergehenden Ansprüche, dadurch gekennzeichnet, daß der Fühler ferner eine Spule ($B_7$) für den Temperaturausgleich aufweist.

6. Vorrichtung nach Anspruch 5, zur Anwendung bei der Ausrichtung eines Schweißbrenners ($T_S$), dadurch gekennzeichnet, daß der Fühler einen an dem Brenner angebrachten Ring (10) aus keramischem Material aufweist, wobei der Ring die Spulen derart trägt, daß sich die Spulen ($B_7$) für den Temperaturausgleich in der Nähe der Oberfläche des Brenners befindet.

7. Verfahren zur Inbetriebnahme einer Vorrichtung zum Ausrichten eines Organes nach einem der vorhergehenden Ansprüche, dadurch gekennzeichnet, daß es darin besteht :

für jede Spule des Fühlers ein Nähesignal ($d_1$ bis $d_6$) zu erzeugen, welches den diese Spule von der gegenüberliegenden Oberfläche trennenden Abstand anzeigt,

die Steuersignale zur Ausrichtung ($\Delta_\alpha$, $\Delta_y$, $\Delta_h$, $\Delta_\beta$, $\Delta_\gamma$) des Organs aufgrund gewisser, paarweise genommener Nähesignale zu erzeugen und

die Übertragung eines Steuersignals auf die Gesamtheit der Antriebsmittel ($M_\alpha$, $M_y$, $M_z$, $M_\beta$, $M_\gamma$) die ihm entspricht, der Inbetriebnahme einer vorhergehenden Gesamtheit von Antriebsmitteln entsprechend einer bestimmten Reihenfolge unterzuordnen.

8. Verfahren nach Anspruch 7, dadurch gekennzeichnet, daß man aufeinanderfolgend durchführt :

winkelmäßige Ausrichtung ($\alpha$) um eine Achse, die zu der querverlaufenden Ebene senkrecht ist und durch das Ende des Organs hindurchgeht,

seitliche Positionierung (y) in der querverlaufenden Ebene längs einer Richtung, die senkrecht zu der Winkelhalbierenden des Winkels ist, der zwischen den entsprechenden Spulen des ersten und zweiten Spulenpaares gebildet ist,

höhenmäßige Positionierung 9h) in der querverlaufenden Ebene längs einer zu der Winkelhalbierenden parallelen Richtung,

winkelmäßige Ausrichtung ($\beta$), um eine zu der Winkelhalbierenden parallel und durch das Ende des Organs hindurchgehende Achse, und

winkelmäßige Ausrichtung ($\gamma$) um eine zu der querverlaufenden Ebene parallele Achse, die senkrecht zu der Winkelhalbierenden ist und durch das Ende des Organs hindurchgeht.

9. Verfahren nach Anspruch 8, dadurch gekennzeichnet, daß man nach der Durchführung der winkelmäßigen Ausrichtung ($\alpha$) den zwischen den Oberflächen gebildeten Winkel (A) überprüft, und daß man eine Warnung (14) auslöst, wenn die Abweichung ($\Delta A$) zwischen dem wirklichen Winkel und dem ursprünglichen Winkel einen bestimmten Wert überschreitet.

FIG. 1

FIG. 2

FIG. 3

FIG. 4

FIG. 5

2

FIG. 6a

FIG. 6b

FIG. 7

FIG. 8

FIG. 9